# EUROPEAN PATENT SPECIFICATION

(11) **EP 2 894 097 B1**
(45) Date of publication and mention of the grant of the patent: **26.04.2017**
(21) Application number: 13835159.8
(22) Date of filing: 07.03.2013
(51) Int. Cl.: B64C 39/00

(54) **ELECTRODYNAMIC DISH-SHAPED FLYING GENERATOR**
ELEKTRODYNAMISCHER TELLERFÖRMIGER FLIEGENDER GENERATOR
GÉNÉRATEUR VOLANT EN FORME DE DISQUE ÉLECTRODYNAMIQUE

(30) Priority: 06.09.2012 CN 201210328609
(43) Date of publication of application: 15.07.2015
(73) Proprietor: Lickpo Limited, Hong Kong 518115 (CN)
(72) Inventor: LIANG, Xiqiu, Hong Kong 518115 (CN)
(74) Representative: Becker Kurig Straus
(86) International application number: PCT/CN2013/072278
(87) International publication number: WO 2014/036818

(56) References cited:
- WO-A2-93/14973
- CN-A- 1 530 288
- CN-A- 101 557 982
- CN-A- 102 358 424
- CN-A- 102 358 424
- CN-A- 102 556 350
- US-A1- 2004 069 897
- US-A1- 2004 069 901
- US-A1- 2010 001 143
- US-A1- 2011 272 520

## Description

### FIELD OF TECHNOLOGY

The present application relates to a flying machine, and particularly to an electrodynamic dish-shaped power-generating flying machine using magnetic-levitation technology.

### BACKGROUND OF TECHNOLOGY

Existing dish-shaped flying machines adopt jet method and rotor and wing method to generate lifting force and driving force, and use fuel as the flying and start-up power source. These two methods need to consume a lot of energy and are not beneficial for popularization and application. Furthermore, both methods have defects such as imbalance and discomfort, hard to achieve automatic control, noisy, discharge of harmful exhaust gas and against environment protection. Therefore, nowadays there are no large scale dish-shaped machines flying on earth for carrying goods or passengers.

Also, linear synchronous motor and magnetic-levitation technology are quite matured technology these days. For example, in a magnetic-levitation train, first magnets are provided on the body of the train and coils are mounted on a bottom portion of the guide rail. When electrified, the polarity of magnetic field generated by the guide rail coils always remains the same as that of the first magnets. Two like magnetic poles repel each other and the repulsion force renders the train to be levitated. Two sides of the guide rail are also provided with coils. Alternating current turns the coils into first magnets. They work together with the first magnets on the body of the train to make the train moves forwards.

The principle of moving a magnetic-levitation vehicle is the same as that of a linear synchronous electric motor. The first magnet (N pole) of the vehicle is attracted to the first magnet (S pole) a little bit at the front of the guide rail, and at the same time repelled by the first magnet (N pole) a little bit at the rear of the guide rail. The result is a "one-push, one-pull" result. A running magnetic-levitation vehicle maintains a clearance (usually 1-10 cm) from the guide rail. Hence, the vehicle is safe, steady, comfortable and less noisy. Full automation can be achieved.

Such a flying vehicle is disclosed by document CN102358424. Flight paths in the sky appear to be saturated over all cities in the world. There is a shortage of land to build or extend airport runways. There are more and more traffic on the ground. Roads become congested and transportation becomes difficulty. Existing aircrafts (such as airplanes) for carrying passengers and goods need flight paths and takeoff runways. When the demand for carrying passengers and goods increases, it will intense up the flight paths and runways, and will increase the danger of flying.

The technical problem to be solved is to provide an electrodynamic dish-shaped power-generating flying machine which is steady, less noisy, consumes less energy and would not discharge harmful exhaust gas. During an electrodynamic flight, the electrodynamic dish-shaped power-generating flying machine can recover energy and generate power for the flight.

### SUMMARY

To solve the above-mentioned technical problem, there is provided an electrodynamic dish-shaped power-generating flying machine having a machine body including top and bottom dish-shaped housings for transportation and carriage, a power plant for driving the machine body to fly, and a control system for flight control. The power plant includes a plurality of annular ferromagnetic guide rails for generation of magnetic levitation, a plurality of uplift force generating vehicles for generation of uplift force for the electrodynamic dish-shaped power-generating flying machine, and a plurality of forward force generating vehicles for generation of forward force for the electrodynamic dish-shaped power-generating flying machine. The annular ferromagnetic guide rails are symmetrically distributed on opposite outer surfaces of the top and bottom housings and arranged in stepped form.

The uplift force generating vehicles and the forward force generating vehicles are evenly distributed along the annular ferromagnetic guide rails. The bottom portions of the uplift force generating vehicles and the forward force generating vehicles are provided with wheels, first electromagnets and an electric battery for providing initial driving power for the vehicles. The wheels are in rolling engagement with the annular ferromagnetic guide rails. Magnetic lines of force are generated between the first electromagnets and the annular ferromagnetic guide rails to form circular electromagnetic fields.

Each annular ferromagnetic guide rail is formed with two annular wing portions, which are provided with induction coils and a power-generating assembly for power generation. Each annular wing portion of the annular ferromagnetic guide rails becomes a power-generating body, which is provided with a storage battery for storing electric power. Output ends of the induction coils can be connected to electric supply input terminals of the annular ferromagnetic guide rails and the storage battery.

The control system controls the circular movement of the vehicles along the annular ferromagnetic guide rails to generate uplift force and forward force for flying of the flying machine. At the same time the vehicles, when moving in a circle, change the magnetic lines of force of the induction coils so as to render the induction coils to generate electrodynamic force for power generation. The vehicles, the induction coils and the power-generating assembly together may form a power generator. The power generators on the annular ferromagnetic guide rails together form a group of power generators which generates electric energy in the form of electrodynamic force for the generation of magnetic levitation force and driving force between the annular ferromagnetic guide rails and the vehicles. Energy is recovered and stored in a storage battery for standby use.

The control system may control graduate acceleration and circulating speed of 25 km/h - 550 km/h of the uplift force generating vehicles and the forward force generating vehicles along the annular ferromagnetic guide rails so as to shift and reduce the weight of the uplift force generating vehicles and the forward force generating vehicles and maintain the balance of the flying machine. The circular electromagnetic fields formed on the annular ferromagnetic guide rails are joined together to form an electromagnetic field system which repels the earth magnetic field, and the repulsion force forms uplift force for the flying machine.

A top portion of each uplift force generating vehicles may be provided with a wind-catching hood which includes a trumpet-shaped hood body having a large opening and a small opening. The large opening may be facing the same direction as the forward direction of the uplift force generating vehicles, and an adjusting device may be provided inside the wind-catching hood for opening and closing the large opening.

Two blades may extend outwardly from two lateral sides of the forward force generating vehicles respectively and radially with respect to the annular ferromagnetic guide rails. Each blade may be provided with a shank portion and a wind-sweeping wing portion. The shank portions of the blades may be connected with the forward force generating vehicle at a connecting region, and an inclination adjusting device can be provided at the connecting region for adjusting the angle of inclination of the wing portions of the blades. Adjusting ends of the inclination adjusting device may be coupled with the shank portions of the blades. The inclination adjusting device can be electrically connected with a corresponding control terminal of the control system;

The control system first controls power output of the electric battery so as to drive the uplift force generating vehicles and the forward force generating vehicles to move around the annular ferromagnetic guide rails, and at the same time controls the moving directions of the uplift force generating vehicles and the forward force generating vehicles such that the uplift force generating vehicles and the forward force generating vehicles on adjacent annular ferromagnetic guide rails circulate around in opposite directions. After the uplift force generating vehicles and the forward force generating vehicles are levitated, the control system may control the inclination adjusting device so that the wing portions of the blades are adjusted to an angle of 45° with respect to a forward direction of the blades, and that uplift force is generated by wind-catching of the forward force generating vehicles. When the flying machine has climbed to a suitable height and forward movement is needed, the control system may control the adjusting devices in order to close the large openings of the wind-catching hoods, and may control the inclination adjusting devices in order to adjust the wing portions of the blades, so that half of the annular ferromagnetic guide rails is considered as a cycle, and the angle of the wing portions with respect to the forward direction of the blades switches between 0° and 90°, so that the inclination angles of the wing portions at two adjacent halves of the annular ferromagnetic guide rails are opposite to each other so as to achieve forward movement by wind-sweeping of the wing portions of the forward force generating vehicles.

The cross section of each annular ferromagnetic guide rails may be T-shaped with a rectangular trough formed on its top. A central bottom portion of each uplift force generating vehicle and each forward force generating vehicle may be provided with a downwardly extending rectangular projection for accommodating the electric battery, and the rectangular projections can mate with the rectangular troughs of the annular ferromagnetic guide rails.

The uplift force generating vehicles may be provided on the uppermost annular ferromagnetic guide rail of the top housing and the lowermost annular ferromagnetic guide rail of the bottom housing, and the forward force generating vehicles may be provided on the rest of the annular ferromagnetic guide rails. Upper portions of the forward force generating vehicles may also be provided with wind-catching hoods. The cross section of the wing portions of the blades may taper from a rear end to a front end towards forward direction of the forward force generating vehicles.

A wind power generator may further be provided behind the small opening of each wind-catching hood for recovering electric energy. Each wind power generator may be electrically connected to the control system.

The two lateral sides of a bottom portion of each uplift force generating vehicle and each forward force generating vehicle may be formed with two J-shaped bent portions respectively for encompassing the annular ferromagnetic guide rails. Each vehicle may have four wheels supported on the upper and lower surfaces of the left and right sides of the annular ferromagnetic guide rails respectively. The first magnets can be mounted on the bent portions and the rectangular projection proximate to the sides of the annular ferromagnetic guide rails.

A hollow battery-charging ball may be provided inside the machine body. The battery-charging ball may include a lower battery storey for storing lithium ion battery fluid, a middle battery-charging storey for accommodating a battery-charging device, and an upper goods storey for accommodating goods. The control system can transfer recovered electric energy to the battery-charging device in the battery-charging storey for battery charging, and then into the lithium ion battery fluid inside the battery storey for storage. The outer peripheral of the battery-charging ball may be provided with a sealed spherical housing for the isolation of radiation.

A platform may be provided inside the sealed spherical housing. Annular guide rails for magnetic levitation and goods-carrying vehicles can be provided on the platform. The goods-carrying vehicles may be provided on the annular guide rails and are adapted to be driven around by magnetic levitation at a speed of 100 km/h - 200 km/h in order to shift and reduce the weight of the goods so that the goods-carrying vehicles are in a weight reduction condition. A lower portion of the battery-charging ball may be provided with a base for magnetic levitation of the battery-charging ball. The base can be fixed on the sealed spherical housing. A lower end of the battery-charging ball may be provided with second magnets and a set of rollers for initial rotation and support of the battery-charging ball, rendering the battery-charging ball to rotate above the base.

A water reservoir may be provided inside the sealed spherical housing on a lower housing thereof. A plurality of water pumps may be provided inside the water reservoir for driving water insider the water reservoir in a circle. A plurality of triangular or cross-shaped water bags may be provided on the water surface of the water reservoir for preventing water splashing.

Compared to the existing technology, the electrodynamic dish-shaped power-generating flying machine of the present application has the following advantages:
(1) The flying machine of the present application avoids using fuel as the flying power source. Instead, it uses electricity as power for the generation of magnetic levitation. It also provides with magnetic induction coils for recovering energy. Annular ferromagnetic guide rails with magnetic induction coils, uplift force generating vehicles, forward force generating vehicles and power generator assembly together form power generators. Circulating vehicles make magnetic lines of force of each induction coil change and generate electrodynamic force, to thereby change mechanical force into electrical force so that each vehicle, when consuming energy, can at the same time recover energy for the annular ferromagnetic guide rails or for storage in the storage battery. It does not affect the vehicles running along the guide rails. Furthermore, wind power generators provided behind wind-catching hoods can also recover energy. Also, a battery-charging ball is provided inside the machine body for collecting energy so that the flying machine can recover and make use of energy and can therefore substantially reduce the need for energy consumption. It is beneficial for popularization and application;
(2) Magnetic-levitation method is adopted. The supply of uplift force and forward force to the electrodynamic dish-shaped power-generating flying machine is achieved by moving vehicles in a circle. Each vehicle runs steadily around the annular ferromagnetic guide rails. Automatic control can be easily achieved. The flying machine of the present application is less noisy, has no harmful discharge of exhaust gas, low in operation and maintenance costs and low in energy consumption;
(3) Existing transportation means shift the weight of their bodies by linear dashing. They are not provided with annular space for circulation. However, the flying machine of the present application is provided with annular track-style orbits. Uplift force generating vehicles and forward force generating vehicles can move around annular ferromagnetic guide rails in a circle. The weight and the load on each vehicle can be shifted and become momentum. Momentum and speed can increase continuously and render the flying machine to dash out and reduce its weight to thereby forming a light body that can easily climb up and fly. It can also enhance the balance of the dish-shaped power-generating flying machine (similar to stability of a spinning top). Furthermore, each annular ferromagnetic guide rail can form an independent electromagnetic field for power generation. Electromagnetic fields join together to form an electromagnetic field system for the power-generating flying machine. The enhanced excitation can make generator to generate power to form a larger electromagnetic field system. The electromagnetic field system of the entire flying machine and the earth magnetic field repel each other so that the earth exerts an uplift repulsion force on the flying machine, and assist the flying machine in uplifting and maintaining its balance;
(4) The flying machine of the present application can control the opening and closing of the large openings of the wind-catching hoods according to different circumstances in order to control wind resistance. The electric battery of each vehicle is hidden inside a rectangular projection. This can reduce wind resistance due to catching of wind by the battery. This facilitates steady uplifting of the electrodynamic dish-shaped power-generating flying machine of the present application;
(5) The blades of the flying machine tapers from rear to front. This facilitates the generation of uplift force. It also has wind-catching hoods for the generation of uplift force so that the electrodynamic dish-shaped power-generating flying machine possesses a good load capacity. One flight can carry more passengers and goods. It uses wide flight paths without runways, and makes flying safe. The electrodynamic dish-shaped power-generating flying machine is a low altitude flying machine and does not occupy existing flight paths and does not occupy airport space;
(6) Existing technology does not have dish-shaped flying machine provided with "goods-carrying vehicles" running at high speed in a circle along guide rails. The goods-carrying vehicles of flying machine of the present application can run at high speed in a circle around the guide rails (runways) on the machine body. This can reduce the weight of the machine body and the goods so that the flying machine can carry goods, climb up and fly easily; and
(7) Water reservoir is provided inside the machine body of the flying machine. When water is poured inside the reservoir and air is mixed with the water, it can speed up water flowing movement. The high speed water movement mixed with air can reduce the weight of the water. The high speed water movement generates a large amount of electromagnetic electrons to facilitate heat dissipation of the electrodynamic dish-shaped power-generating flying machine and reduce radiation which is harmful to human body.

### BRIEF DESCRIPTION OF THE DRAWINGS

Specific embodiments of the electrodynamic dish-shaped power-generating flying machine will now be described by way of example with reference to the accompanying drawings wherein:
FIG. 1 is a perspective view of an embodiment of an electrodynamic dish-shaped power-generating flying machine of the present application;
FIG. 2 is a top view of FIG. 1;
FIG. 3 is a front view of FIG. 1;
FIG. 4 is a cross sectional view of FIG. 3 (without uplift force generating vehicles and forward force generating vehicles);
FIG. 5 is a perspective view of an embodiment of the uplift force generating vehicle;
FIG. 6 is a cross sectional view of the uplift force generating vehicle;
FIG. 7 is a cross sectional view of a wind-catching hood of the uplift force generating vehicle when the large opening is in an opened position;
FIG. 8 is a cross sectional view of the wind-catching hood of the uplift force generating vehicle when the large opening is in a closed position;
FIG. 9 is a perspective view of an embodiment of the forward force generating vehicle;
FIG. 10 is a cross sectional view of the forward force generating vehicle;
FIG. 11 is a side view of a wing portion of a blade;
FIG. 12 is a cross sectional view of the uplift force generating vehicle or the forward force generating vehicle in a levitated condition;
FIG. 13 is a partial perspective view of the uplift force generating vehicles with the large openings of the wind-catching hoods in their closed position, and vehicles with the wing portions in their wind-sweeping position; and
FIG. 14 is a top view of the electrodynamic dish-shaped power-generating flying machine in a wind-sweeping and forward moving condition.

In the figures: 1, top housing; 2, bottom housing; 3, annular ferromagnetic guide rail; 31, rectangular trough; 4, uplift force generating vehicle; 5, forward force generating vehicle; 6, wheel; 7, first electromagnet; 8, rectangular projection; 9, wind-catching hood; 91, large opening; 92, small opening; 10, adjusting device; 11, blade; 111, shank portion; 112, wing portion; 12, inclination adjusting device; 13, wind power generator; 14, bent portion; 15, battery-charging ball; 151, battery storey; 152, battery-charging storey; 153, goods storey; 16, base; 17, second magnet; 18, roller; 19, water reservoir; 20, water pump; 21, water bag; 22, platform; 23, induction coil; 24, sealed spherical housing.

### DETAILED DESCRIPTION

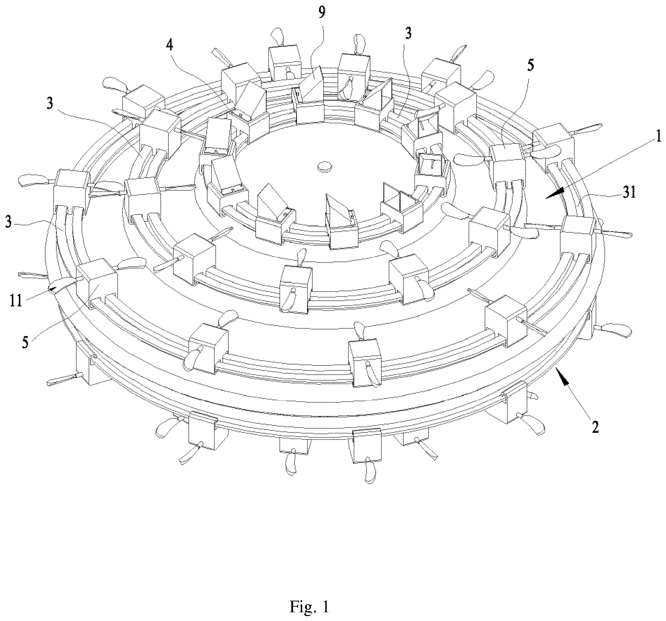

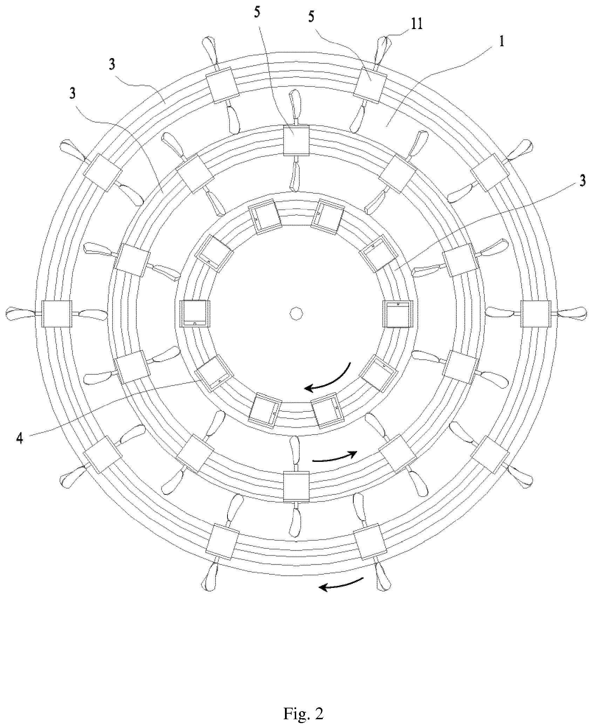

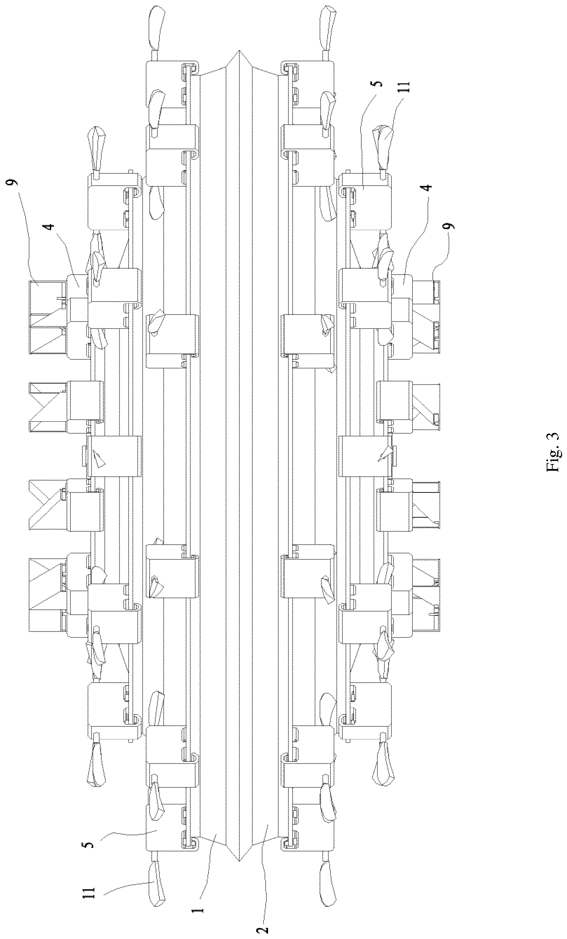

FIGS. 1-4 show an embodiment of an electrodynamic dish-shaped power-generating flying machine which may include a machine body having top and bottom dish-shaped housings 1, 2 for transportation and carriage, a power plant for driving the machine body to fly, and a control system for the flight control. The power plant may include a plurality of annular ferromagnetic guide rails 3 for generation of magnetic levitation, a plurality of uplift force generating vehicles 4 for generation of uplift force for the electrodynamic dish-shaped power-generating flying machine, and a plurality of forward force generating vehicles 5 for the generation of forward force for the electrodynamic dish-shaped power-generating flying machine. The annular ferromagnetic guide rails 3 may be symmetrically distributed on opposite outer surfaces of the top and bottom housings 1, 2 and may be arranged in stepped form. The cross section of the annular ferromagnetic guide rails 3 may be T-shaped with a rectangular trough 31 formed on its top. In the present embodiment, there are six annular ferromagnetic guide rails 3 symmetrically distributed on opposite outer surfaces of the top and bottom housings 1, 2. The machine body may be made of metal material such as alloy, plastic material, or carbon compound material such as carbon fiber. The diameter of the top and bottom housings 1, 2 may be between 6m and 20m. Platform regions can be provided inside the machine body for carrying passengers and goods. According to the need of the number of passengers and the amount of goods to be carried and the speed of the flight, the number of the annular ferromagnetic guide rails 3 can be increased. For example, six annular ferromagnetic guide rails 3 can be provided on the top housing 1 and six annular ferromagnetic guide rails 3 can be provided on the bottom housing 2 to increase the power.

The uplift force generating vehicles 4 and the forward force generating vehicles 5 may be evenly distributed along the annular ferromagnetic guide rails 3. In the present embodiment, the uplift force generating vehicles 4 can be provided on the uppermost annular ferromagnetic guide rail 3 of the top housing 1 and the lowermost annular ferromagnetic guide rail 3 of the bottom housing 2, and the forward force generating vehicles 5 can be provided on the rest of the annular ferromagnetic guide rails 3. This is beneficial for a steady flight of the electrodynamic dish-shaped power-generating flying machine.

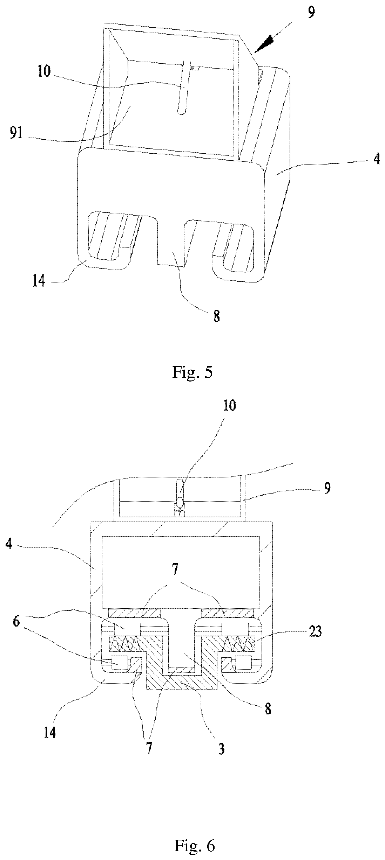

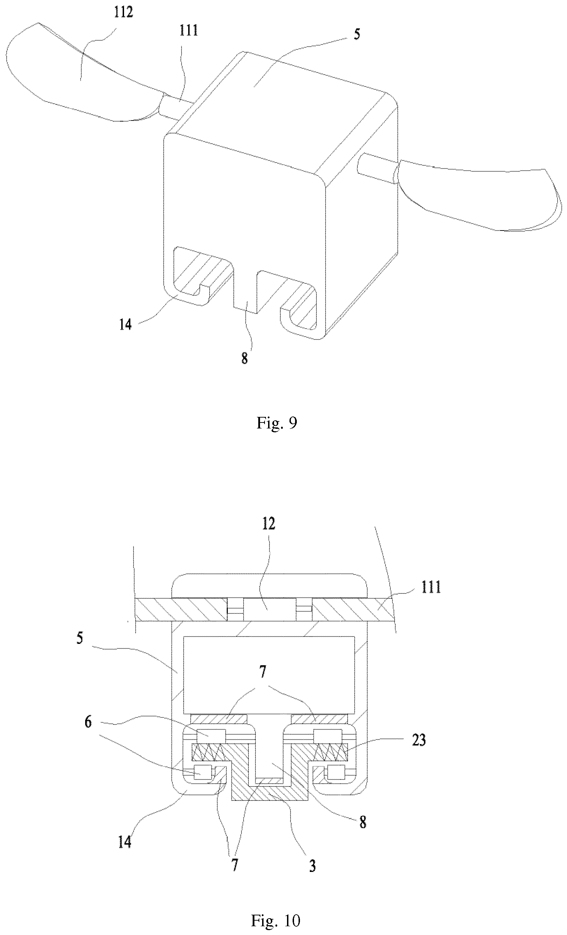

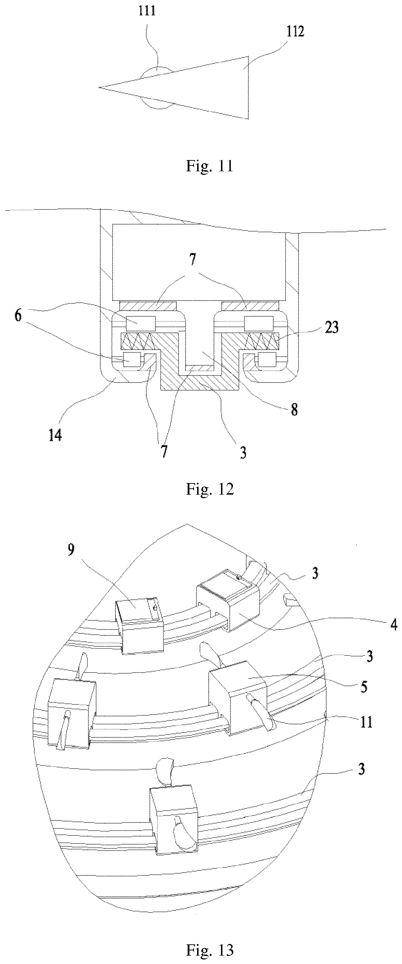

As shown in FIGS. 6 and 10, the bottom portions of the uplift force generating vehicles 4 and the forward force generating vehicles 5 may be provided with wheels 6, first electromagnets 7 and an electric battery (not shown) for providing initial driving power for the vehicles 4, 5. The wheels 6 can be in rolling engagement with the annular ferromagnetic guide rails 3. When the vehicles 4, 5 initially circulate forwards, they can be supported by the wheels 6. The first electromagnets 7 can cooperate with the annular ferromagnetic guide rails 3 to generate levitation force and driving force, rendering the uplift force generating vehicles 4 and the forward force generating vehicles 5 to levitate and move around the annular ferromagnetic guide rails 3 in a circle. Magnetic lines of force can be generated between the first electromagnets 7 and the annular ferromagnetic guide rails 3 to form circular electromagnetic field. At this time the vehicles 4, 5 make no contact with the annular ferromagnetic guide rails 3 as shown in FIG. 12. The magnet assemblies form the portions of the annular ferromagnetic guide rails 3 that repel and drag with the first magnets 7. A central bottom portion of each uplift force generating vehicle 4 and each forward force generating vehicle 5 may be provided with a downwardly extending rectangular projection 8 for accommodating the electric battery. The rectangular projections 8 can mate with the rectangular troughs 31 of the annular ferromagnetic guide rails 3. The hiding of the electric battery inside the rectangular projections 8 can reduce wind resistance due to sweeping of wind by the electric battery itself.

As shown in FIGS. 6, 10 and 12, each annular ferromagnetic guide rail 3 may be formed with two annular wing portions, which may be provided with induction coils 23 and a power-generating assembly (not shown) for power generation. That means each annular wing portion of the annular ferromagnetic guide rails 3 becomes a power-generating body, which is provided with a storage battery (not shown) for storing electric power. Output ends of the induction coils 23 can be connected to electric supply input terminals of the annular ferromagnetic guide rails 3 and the storage battery. The annular ferromagnetic guide rails 3 with the induction coils 23, the uplift force generating vehicles 4, the forward force generating vehicles 5 together with the corresponding power-generating assembly and electric wires, form into a group of power generators. The power generators can be connected to a power input terminal of the annular ferromagnetic guide rails 3 for power supply. Generated power can also be stored in the storage battery for other usage. The power plant provides power through the supply of electricity. Charging of the storage battery by an external power supply can be carried out during initial operation in order to provide power to the power plant. The control system controls circular movement of the vehicles 4, 5 along the annular ferromagnetic guide rails 3 to generate uplift force and forward force for flying of the flying machine. At the same time the vehicles 4, 5, when moving in a circle, change the magnetic lines of force of the induction coils 23 so as to render the induction coils 23 to generate electrodynamic force for power generation. The group of power generators generate electric energy in the form of electrodynamic force for the generation of magnetic levitation force and driving force between the annular ferromagnetic guide rails 3 and the vehicles 4, 5, and recover and store the electric energy in the storage battery for standby use. The storage battery can be in the form of a plurality of batteries combined together to form a storage battery set.

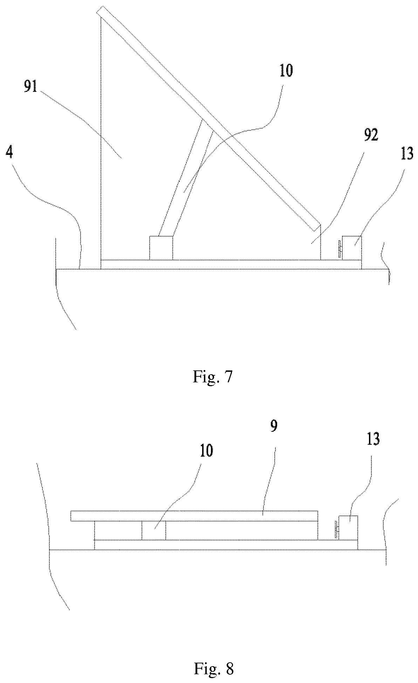

As shown in FIG. 5, a top portion of each uplift force generating vehicles 4 is provided with a wind-catching hood 9 for catching wind and generating uplift force. As shown in FIGS. 7 and 8, the wind-catching hood 9 may have a trumpet-shaped hood body having a large opening 91 and a small opening 92. The large opening 91 may be facing the same direction as the forward direction of the uplift force generating vehicles 4. The line joining the center of the large and small openings 91, 92 may have an angle of 45° with respect to the forward direction of the uplift force generating vehicles 4. An adjusting device 10 can be provided inside the wind-catching hood 9 for opening and closing the large opening 91. In the present embodiment, the adjusting device 10 can be in the form of a pneumatic telescopic rod for pulling a top panel of the wind-catching hood 9 so that the top panel can be folded down and the large opening 91 can be closed. The wind-catching hoods 9 may be in the form of surrounding and shielding canvas or other soft material. The wind-catching hoods 9 may also be formed by joining metal plates with a structure for opening and closing the large openings 91 by pneumatic telescopic rods. Also, the angle between the line joining the center of the large and small openings 91, 92 and the forward direction of the uplift force generating vehicles 4 may be set at other angle, such as 30°- 60°, that can generate uplift force.

As shown in FIG. 9, two blades 11 can extend outwardly from two lateral sides of each forward force generating vehicle 5 respectively, and extend radially with respect to the annular ferromagnetic guide rails 3. Each blade 11 may be provided with a shank portion 111 and a wind-sweeping wing portion 112. As shown in FIG. 11, the cross section of the wing portions 112 of the blades 11 tapers from a rear end to a front end (like a blade) towards the forward direction of the forward force generating vehicles 5. This structure is beneficial in reduction of wind resistance and generation of uplift force. As shown in FIG. 10, the shank portions 111 of the blades 11 may be connected with the forward force generating vehicle 5 at a connecting region. An inclination adjusting device 12 may be provided at the connecting region for adjusting the angle of inclination of the wing portions 112 of the blades 11. Adjusting ends of the inclination adjusting device 12 may be coupled with the shank portions 111 of the blades 11. The inclination adjusting device 12 may be electrically connected with a corresponding control terminal of the control system. In the present embodiment, a motor can be used. The motor output shaft can be connected to the shank portion 111. Under the control of the control system, the motor can drive the shank portion 111 to rotate and switch from one position to another position.

The control system first controls power output of the electric batteries so as to drive the uplift force generating vehicles 4 and the forward force generating vehicles 5 to move in a circle around the annular ferromagnetic guide rails 3, and at the same time controls the moving directions of the uplift force generating vehicles 4 and the forward force generating vehicles 5 such that the uplift force generating vehicles 4 and the forward force generating vehicles 5 on adjacent annular ferromagnetic guide rails 3 circulate around in opposite directions. In the illustrated embodiment, the uplift force generating vehicles 4 on the uppermost annular ferromagnetic guide rail 3 of the top housing 1 circulate in a clockwise direction. The forward force generating vehicles 5 on the middle annular ferromagnetic guide rail 3 of the top housing 1 circulate in an anticlockwise direction. The forward force generating vehicles 5 on the peripheral annular ferromagnetic guide rail 3 of the top housing 1 circulate in a clockwise direction. The uplift force generating vehicles 4 on the lowermost annular ferromagnetic guide rail 3 of the bottom housing 2 circulate in an anticlockwise direction. The forward force generating vehicles 5 on the middle annular ferromagnetic guide rail 3 of the bottom housing 2 circulate in a clockwise direction. The forward force generating vehicles 5 on the peripheral annular ferromagnetic guide rail 3 of the bottom housing 2 circulate in an anticlockwise direction. The clockwise and anticlockwise circulating movement can render the electrodynamic dish-shaped power-generating flying machine to fly steadily due to the effect of the uplift force and forward force of the vehicles 4, 5. Also, the circulating directions of the uplift force generating vehicles 4 and the forward force generating vehicles 5 can be set by the control system according to one's need.

The control system can control graduate acceleration and circulating speed of the uplift force generating vehicles 4 and the forward force generating vehicles 5 along the annular ferromagnetic guide rails 3. In the present embodiment, the circulating speed is 40 km/h. This can shift and reduce the weight of the uplift force generating vehicles 4 and the forward force generating vehicles 5 and maintain the balance of the electrodynamic dish-shaped power-generating flying machine. The circular electromagnetic field of each annular ferromagnetic guide rail 3 may join together to form an electromagnetic field system that repels the earth magnetic field, and form a repulsion force of more than 2% of the weight of the power-generating flying machine. That repulsion force becomes an uplift force. Like magnets repel each other to form repulsion force which renders the power-generating flying machine to enter into a condition where it can move and glide forwards effortlessly. It is beneficial for the electrodynamic dish-shaped power-generating flying machine to easily climb, fly and increase in speed. The high circulating speed of the uplift force generating vehicles 4 and the forward force generating vehicles 5 can be set at 25 km/h - 550 km/h. For example, 150 km/h, 200 km/h or 500 km/h can produce and realize uplifting effect. When the circulating speed reaches 25 km/h, a weight reduction state starts to form and weight reduction effect increases as speed increases.

As shown in FIGS. 1-3, after the uplift force generating vehicles 4 and the forward force generating vehicles 5 have levitated on the annular ferromagnetic guide rails 3, the control system controls the inclination adjusting devices 12 so that the wing portions 112 of the blades 11 can be adjusted to an angle of 45° with respect to the forward direction of the blades 11, and uplift force can be generated by the catching of wind by the forward force generating vehicles 5. The uplift force generating vehicles 4 and the forward force generating vehicles 5 both catch the wind and uplift the annular ferromagnetic guide rails 3. Also, the inclination angle of the wing portions 112 for the generation of uplift force can also be set at other angles, such as 30° - 90°.

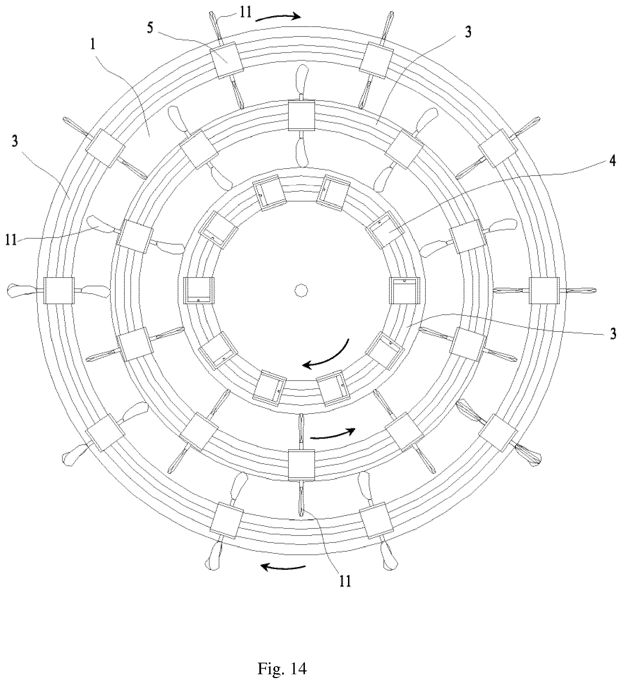

As shown in FIGS. 13 and 14, when the flying generator has climbed to a suitable height and forward movement is needed, the control system controls the adjusting devices 10 in order to close the large openings 91 of the wind-catching hoods 9, and controls the inclination adjusting devices 12 in order to adjust the wing portions 112 of the blades 11, so that half of the annular ferromagnetic guide rails 3 can be considered as a cycle. The angle of the wing portions 112 with respect to the forward direction of the blades can be switched between 0° and 90°, so that the inclination angles of the wing portions 112 at two adjacent halves of the annular ferromagnetic guide rails 3 are opposite to each other so as to achieve forward movement by wind-sweeping of the wing portions 112 of the forward force generating vehicles 5. When the wing portions 112 are at 0°, i.e. in a horizontal state, the wing portions 112 do not sweep the wind but generate uplift force so as to maintain the height of the electrodynamic dish-shaped power-generating flying machine. When the wing portions 112 are at 90°, i.e. in a vertical state, the wing portions 112 sweep the wind and generate forward force so as to drive the electrodynamic dish-shaped power-generating flying machine forwards. As shown in FIG. 14, from bottom to top, at a certain flying moment the wing portions 112 at the lower half of the peripheral annular ferromagnetic guide rail 3 can be switched to horizontal state. The wing portions 112 at the lower half of the middle annular ferromagnetic guide rail 3 can be switched to vertical state. The wing portions 112 at the upper half of the peripheral annular ferromagnetic guide rail 3 can be switched to vertical state. The wing portions 112 at the upper half of the middle annular ferromagnetic guide rail 3 can be switched to horizontal state. At this time, the electrodynamic dish-shaped power-generating flying machine moves forwards to the left. When the uplift force generating vehicles 4 are stopped (i.e. the power-generating flying machine is stopped), the control system controls the wind-catching hoods 9 and closes the large openings 91. When the speed of the uplift force generating vehicles 4 reaches 120km/h, the control system controls the large openings 91 so that they slightly open up. The large openings 91 can be fully opened after the speed of the uplift force generating vehicles 4 continues to increase so as to generate uplift force. When the forward speed of the electrodynamic dish-shaped power-generating flying machine reaches the flight requirement, the control system controls and closes the large openings 91 of the wind-catching hoods 9 to prevent the wind-catching hoods 9 from shielding the wind.

As shown in FIGS. 7 and 8, a wind power generator 13 may be further provided behind the small opening 92 of each wind-catching hood 9 for recovering electric energy. Each wind power generator 13 can be electrically connected to the control system.

As shown in FIGS. 6, 10 and 12, the two lateral sides of a bottom portion of each uplift force generating carriage 4 and each forward force generating carriage 5 may be formed with two J-shaped bent portions 14 respectively for encompassing the annular ferromagnetic guide rails 3. Each vehicle 4, 5 may have four wheels 6 supported on the upper and lower surfaces of the left and right sides of the annular ferromagnetic guide rails 3 respectively. The first magnets 7 may be mounted on the bent portions 14 and the rectangular projection 8 proximate to the sides of the annular ferromagnetic guide rails 3.

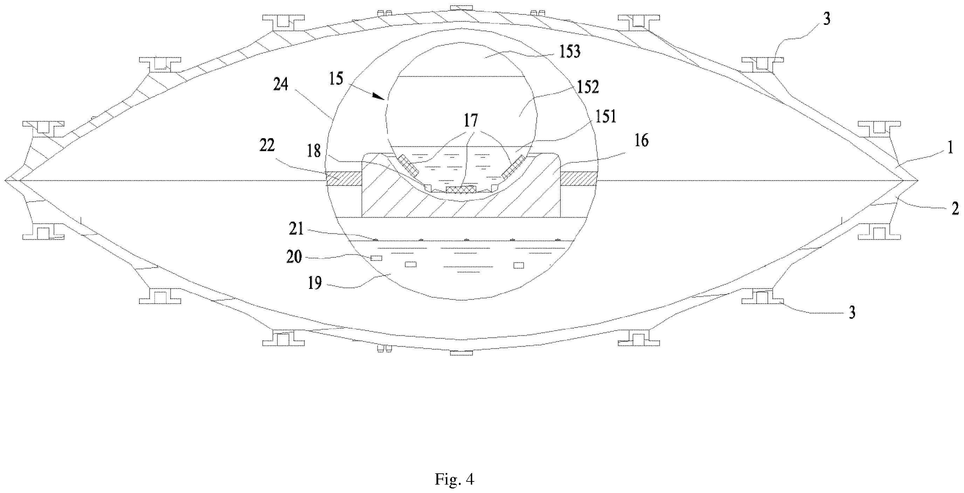

As shown in FIG. 4, a hollow battery-charging ball 15 may be provided inside the machine body. The battery-charging ball 15 may include a lower battery storey 151 for storing lithium ion battery fluid, a middle battery-charging storey 152 for accommodating a battery-charging device, and an upper goods storey 153 for accommodating goods. The control system may transfer recovered electric energy to the battery-charging device in the battery-charging storey 152 for battery charging, and then into the lithium ion battery fluid inside the battery storey 151 for storage. Other battery fluid may also be stored inside the battery storey 151. The outer peripheral of the battery-charging ball 15 may be provided with a sealed spherical housing 24 for the isolation of radiation. A platform 22 may be provided inside the sealed spherical housing 24 for carrying goods or passengers. Annular guide rails for magnetic levitation and goods-carrying vehicles may be provided on the platform 22. The goods-carrying vehicles can be provided on the annular guide rails and can be adapted to be driven around by magnetic levitation. The principle of the annular guide rail and goods-carrying vehicles is the same as the annular ferromagnetic guide rail 3, the uplift force generating vehicles 4 and the forward force generating vehicles 5. The speed of the goods-carrying vehicles can be set at a speed of about 100 km/h in order to shift and reduce the weight of the goods so that the goods-carrying vehicles can be in a weight reduction condition. The weight of the goods can be reduced to about 3/95 of the original weight. The reduction of weight of the goods increases as the speed of the goods-carrying vehicles increases. Therefore, the speed of the goods-carrying vehicles can be set at above 100 km/h, such as 150 km/h, 200 km/h or 300 km/h. A lower portion of the battery-charging ball 15 may be provided with a base 16 for magnetic levitation of the battery-charging ball 15. The base 16 can be fixed on the sealed spherical housing 24. A lower end of the battery-charging ball 15 may be provided with second magnets 17 and a set of rollers 18 for initial rotation and support of the battery-charging ball 15, rendering the battery-charging ball 15 to rotate above the base 16. High speed revolving battery-charging ball 15 can reduce weight and facilitate the climbing of the electrodynamic dish-shaped power-generating flying machine. Induction coils of power generator can be added between the second magnets 17 and the base 15 and supplemented with corresponding power generator assembly so that energy can be recovered. That power generator assembly can combine with the power generator assembly on the annular ferromagnetic guide rails for power generation.

As shown in FIG. 4, a water reservoir 19 may be provided inside the sealed spherical housing 24 on a lower housing thereof. A plurality of water pumps 20 may be provided inside the water reservoir 19 for driving water insider the water reservoir 19 in a circle. A plurality of triangular water bags 21 may be provided on the water surface of the water reservoir 20 for preventing water splashing. The water bags 21 may be in the shape of a cross. The pressure of the water bags 21 on the water surface can also facilitate the pumping of water by the water pump 20 to a water-cooling region for cooling, or form a waterfall or water wall to keep out the radiation from human body. The water pump 20 can make the water move in a circle. The use of water bags 21 can prevent the formation of eye of whirlpool which makes the water move in a circle, shifts the gravity and forms a weight reduction state.

Existing transportation means shift the weight of their bodies by linear dashing. They are not provided with annular space for circulation. However, the vehicles inside the flying machine of the present application can move in a circle at high speed. The continue increase in speed of the vehicles can reduce the weight of the flying machine so that it can fly easily.

Also, the forward force generating vehicles 5 of the electrodynamic dish-shaped power-generating flying machine can also be provided with wind-catching hoods. These hoods can be used to increase uplift counterbalance force when the load on the flying machine is increased

The magnetic-levitation method adopted by the annular ferromagnetic guide rails 3 and the vehicles, as well as the magnetic-levitation method adopted by the base 16 and the battery-charging ball 15 are known magnetic-levitation technology and are not described here in detail.

While the electrodynamic dish-shaped power-generating flying machine has been shown and described with particular references to a number of preferred embodiments thereof, it should be noted that various other changes or modifications may be made without departing from the scope of the appended claims.

## Claims

1. An electrodynamic dish-shaped power-generating flying machine having a machine body comprising top and bottom dish-shaped housings (1, 2) for transportation and carriage, a power plant for driving the machine body to fly, and a control system for flight control the power plant comprising a plurality of annular ferromagnetic guide rails (3) for generation of magnetic levitation, a plurality of uplift force generating vehicles (4) for generation of uplift force for the electrodynamic dish-shaped power-generating flying machine, and a plurality of forward force generating vehicles (5) for generation of forward force for the electrodynamic dish-shaped power-generating flying machine; the annular ferromagnetic guide rails (3) being symmetrically distributed on opposite outer surfaces of the top and bottom housings (1, 2) and arranged in stepped form:
the uplift force generating vehicles (4) and the forward force generating vehicles (5) being evenly distributed along the annular ferromagnetic guide rails (3); bottom portions of the uplift force generating vehicles (4) and the forward force generating vehicles (5) being provided with wheels (6) and first electromagnets (7);
the wheels (6) being in rolling engagement with the annular ferromagnetic guide rails (3); magnetic lines of force being generated between the first electromagnets (7) and the annular ferromagnetic guide rails (3) to form circular electromagnetic fields;
each annular ferromagnetic guide rail (3) being formed with two annular wing portions;
the control system controls circular movement of the vehicles (4, 5) along the annular ferromagnetic guide rails (3) to generate uplift force and forward force for flying of the flying machine, and at the same time the vehicles (4, 5), when moving in a circle, change the magnetic lines of force of the induction coils (23) so as to render the induction coils (23) to generate electrodynamic force for power generation; the vehicles (4, 5), the induction coils (23) and the power-generating assembly together form a power generator, the power generators on the annular ferromagnetic guide rails (3) together form a group of power generators which generates electric energy in the form of electrodynamic force for the generation of magnetic levitation force and driving force between the annular ferromagnetic guide rails (3) and the vehicles (4, 5);
**characterized in that**
the uplift force generating vehicles (4) and the forward force generating vehicles (5) are further provided with electric batteries for providing initial driving power for the vehicles (45);
the two annular wing portions of each annular ferromagnetic guide rail (3) are provided with induction coils (23) and a power-generating assembly for power generation, each annular wing portion of the annular ferromagnetic guide rails (3) becoming a power-generating body, which is provided with a storage battery for storing electric power, output ends of the induction coils being connected to electric supply input terminals of the annular ferromagnetic guide rails (3) and the storage battery;
and **in that** the energy is suitable for being recovered and stored in the storage battery for standby use.

2. The electrodynamic dish-shaped power-generating flying machine as claimed in claim 1, **characterized in that** the control system controls graduate acceleration and circulating speed of 25 km/h - 550 km/h of the uplift force generating vehicles (4) and the forward force generating vehicles (5) along the annular ferromagnetic guide rails (3) so as to shift and reduce the weight of the uplift force generating vehicles (4) and the forward force generating vehicles (5) and maintain the balance of the flying machine, the circular electromagnetic fields formed on the annular ferromagnetic guide rails (3) are joined together to form an electromagnetic field system which repels the earth magnetic field, and the repulsion force forms uplift force for the flying machine.

3. The electrodynamic dish-shaped power-generating flying machine as claimed in claim 1, **characterized in that** a top portion of each uplift force generating vehicles (4) is provided with a wind-catching hood (9) which comprises a trumpet-shaped hood body having a large opening (91) and a small opening (92), the large opening (91) is facing the same direction as the forward direction of the uplift force generating vehicles (4), and an adjusting device (10) is provided inside the wind-catching hood (9) for opening and closing the large opening (91):
two blades (11) extend outwardly from two lateral sides of the forward force generating vehicles (5) respectively and radially with respect to the annular ferromagnetic guide rails (3), each blade (11) being provided with a shank portion (111) and a wind-sweeping wing portion (112), the shank portions (111) of the blades (11) being connected with the forward force generating vehicle (5) at a connecting region, and an inclination adjusting device (12) is provided at the connecting region for adjusting angle of inclination of the wing portions (112) of the blades (11), adjusting ends of the inclination adjusting device (12) being coupled with the shank portions (111) of the blades (11), the inclination adjusting device (12) being electrically connected with a corresponding control terminal of the control system;
the control system first controls power output of the electric battery so as to drive the uplift force generating vehicles (4) and the forward force generating vehicles (5) to move around the annular ferromagnetic guide rails (3), and at the same time controls the moving directions of the uplift force generating vehicles (4) and the forward force generating vehicles (5) such that the uplift force generating vehicles (4) and the forward force generating vehicles (5) on adjacent annular ferromagnetic guide rails (3) circulate around in opposite directions; after the uplift force generating vehicles (4) and the forward force generating vehicles (5) are levitated, the control system controls the inclination adjusting device (12) so that the wing portions (112) of the blades (11) are adjusted to an angle of 45° with respect to a forward direction of the blades (11), and that uplift force is generated by wind-catching of the forward force generating vehicles (5); when the flying machine has climbed to a suitable height and forward movement is needed, the control system controls the adjusting devices (10) in order to close the large openings (91) of the wind-catching hoods (9), and controls the inclination adjusting devices (12) in order to adjust the wing portions (112) of the blades (11), so that half of the annular ferromagnetic guide rails (3) is considered as a cycle, and the angle of the wing portions (112) with respect to the forward direction of the blades switches between 0° and 90°, so that the inclination angles of the wing portions (112) at two adjacent halves of the annular ferromagnetic guide rails (3) are opposite to each other so as to achieve forward movement by wind-sweeping of the wing portions (112) of the forward force generating vehicles (5).

4. The electrodynamic dish-shaped power-generating flying machine as claimed in claim 3, **characterized in that** cross section of each annular ferromagnetic guide rails (3) is T-shaped with a rectangular trough (31) formed on its top; and a central bottom portion of each uplift force generating vehicle (4) and each forward force generating vehicle (5) is provided with a downwardly extending rectangular projection (8) for accommodating the electric battery; and the rectangular projections (8) are adapted to mate with the rectangular troughs (31) of the annular ferromagnetic guide rails (3).

5. The electrodynamic dish-shaped power-generating flying machine as claimed in claim 3, **characterized in that** the uplift force generating vehicles (4) are provided on the uppermost annular ferromagnetic guide rail (3) of the top housing (1) and the lowermost annular ferromagnetic guide rail (3) of the bottom housing (2), and the forward force generating vehicles (5) are provided on the rest of the annular ferromagnetic guide rails (3); upper portions of the forward force generating vehicles (5) being also provided with wind-catching hoods; and the cross section of the wing portions (112) of` the blades (11) tapers from a rear end to a front end towards forward direction of the forward force generating vehicles (5).

6. The electrodynamic dish-shaped power-generating flying machine as claimed in any one of claims 3-5, **characterized in that** a wind power generator (13) is further provided behind the small opening (92) of each wind-catching hood (9) for recovering electric energy, each wind power generator (13) being electrically connected to the control system.

7. The electrodynamic dish-shaped power-generating flying machine as claimed in claim 6, **characterized in that** two lateral sides of a bottom portion of each uplift force generating vehicle (4) and each forward force generating vehicle (5) are formed with two J-shaped bent portions (14) respectively for encompassing the annular ferromagnetic guide rails (3); each vehicle (4, 5) has four wheels (6) supported on upper and lower surfaces of left and right sides of the annular ferromagnetic guide rails (3) respectively; and the first magnets (7) are mounted on the bent portions (14) and the rectangular projection (8) proximate to the sides of the annular ferromagnetic guide rails (3).

8. The electrodynamic dish-shaped power-generating flying machine as claimed in any one of claims 1-5, **characterized in that** a hollow battery-charging ball (15) is provided inside the machine body, the battery-charging ball (15) comprising a lower battery storey (151) for storing lithium ion battery fluid, a middle battery-charging storey (152) for accommodating a battery-charging device, and an upper goods storey (153) for accommodating goods; and the control system transfers recovered electric energy to the battery-charging device in the battery-charging storey (152) for battery charging, and then into the lithium ion battery fluid inside the battery storey (151) for storage; and outer peripheral of the battery-charging ball (15) is provided with a sealed spherical housing (24) for the isolation of radiation.

9. The electrodynamic dish-shaped power-generating flying machine as claimed in claim 8, **characterized in that** a platform (22) is provided inside the sealed spherical housing (24), annular guide rails for magnetic levitation and goods-carrying vehicles are provided on the platform (22), the goods-carrying vehicles being provided on the annular guide rails and are adapted to be driven around by magnetic levitation at a speed of 100 km/h - 200 km/h in order to shift and reduce the weight of the goods so that the goods-carrying vehicles are in a weight reduction condition; and a lower portion of the battery-charging ball (15) is provided with a base (16) for magnetic levitation of the battery-charging ball (15), the base (16) being fixed on the sealed spherical housing (24), and a lower end of the battery-charging ball (15) is provided with second magnets (17) and a set of rollers (18) for initial rotation and support of the battery-charging ball (15), rendering the battery-charging ball (15) to rotate above the base (16).

10. The electrodynamic dish-shaped power-generating flying machine as claimed in claim 9, **characterized in that** a water reservoir (19) is provided inside the sealed spherical housing (24) on a lower housing thereof, a plurality of water pumps (20) is provided inside the water reservoir (19) for driving water insider the water reservoir (19) in a circle, and a plurality of triangular or cross-shaped water bags (21) is provided on the water surface of the water reservoir (20) for preventing water splashing.

## Patentansprüche

1. Elektrodynamische schalenförmige stromerzeugende Flugmaschine mit einem Maschinenkörper, der ein oberes und ein unteres schalenförmiges Gehäuse (1, 2) zum Transport und zur Beförderung umfasst, einer Stromerzeugungsanlage, um den Maschinenkörper zum Fliegen anzutreiben, und einem Steuerungssystem zur Flugsteuerung; wobei die Stromerzeugungsanlage mehrere ringförmige ferromagnetische Führungsschienen (3), zur Erzeugung von magnetischem Schweben, mehrere auftriebskrafterzeugende Vehikel (4), zur Erzeugung einer Auftriebskraft für die elektrodynamische schalenförmige stromerzeugende Flugmaschine, und mehrere vorwärtskrafterzeugende Vehikel (5), zur Erzeugung einer Vorwärtskraft für die elektrodynamische schalenförmige stromerzeugende Flugmaschine, umfasst; wobei die ringförmigen ferromagnetischen Führungsschienen (3) symmetrisch an entgegengesetzten äußeren Oberflächen des oberen und unteren Gehäuses (1, 2) verteilt und in abgestufter Form angeordnet sind;
wobei die auftriebskrafterzeugenden Vehikel (4) und die vorwärtskrafterzeugenden Vehikel (5) gleichmäßig entlang der ringförmigen Führungsschienen (3) verteilt sind; wobei untere Abschnitte der auftriebskrafterzeugenden Vehikel (4) und der vorwärtskrafterzeugenden Vehikel (5) mit Rädern (6) und ersten Elektromagneten (7) versehen sind; wobei die Räder (6) in Rolleingriff mit den ringförmigen ferromagnetischen Führungsschienen (3) stehen; wobei magnetische Kraftlinien zwischen den ersten Elektromagneten (7) und den ringförmigen ferromagnetischen Führungsschienen (3) erzeugt werden, um kreisförmige elektromagnetische Felder zu bilden;
wobei jede ringförmige ferromagnetische Führungsschiene (3) mit zwei ringförmigen Schenkelabschnitten gebildet ist;
wobei das Steuerungssystem eine kreisförmige Bewegung der Vehikel (4, 5) entlang der ringförmigen ferromagnetischen Führungsschienen (3) steuert, um Auftriebskraft und Vorwärtskraft zum Fliegen der Flugmaschine zu erzeugen, und wobei gleichzeitig die Vehikel (4, 5), wenn sie sich in einem Kreis bewegen, die magnetischen Kraftlinien der Induktionsspulen (23) ändern, um so die Induktionsspulen (23) zu veranlassen, eine elektrodynamische Kraft zur Stromerzeugung zu erzeugen; wobei die Vehikel (4, 5), die Induktionsspulen (23) und die stromerzeugende Anordnung zusammen einen Stromerzeuger bilden, wobei die Stromerzeuger auf den ringförmigen ferromagnetischen Führungsschienen (3) zusammen eine Gruppe von Stromerzeugern bilden, welche elektrische Energie in der Form elektrodynamischer Kraft für die Erzeugung einer magnetischen Schwebekraft und einer Antriebskraft zwischen den ringförmigen ferromagnetischen Führungsschienen (3) und den Vehikeln (4, 5) erzeugt;
**dadurch gekennzeichnet, dass**
die auftriebskrafterzeugenden Vehikel (4) und die vorwärtskrafterzeugenden Vehikel (5) weiterhin mit elektrischen Batterien versehen sind, zum Bereitstellen anfänglichen Antriebsstroms für die Vehikel (4, 5);
wobei die zwei ringförmigen Schenkelabschnitte für jede ringförmige ferromagnetische Führungsschiene (3) mit Induktionsspulen (23) und einer stromerzeugenden Anordnung zur Stromerzeugung versehen sind, wobei jeder ringförmige Schenkelabschnitt der ringförmigen ferromagnetischen Führungsschienen (3) ein stromerzeugender Körper wird, welcher mit einer Speicherbatterie zum Speichern elektrischen Stroms versehen ist, wobei Ausgangsenden der Induktionsspulen mit Elektrizitätsversorgungs-Eingangsanschlüssen der ringförmigen ferromagnetischen Führungsschienen (3) und der Speicherbatterie verbunden sind;
und dadurch, dass die Energie geeignet ist, in der Speicherbatterie zur Bereitschaftsverwendung zurückgewonnen und gespeichert werden zu können.

2. Elektrodynamische schalenförmige stromerzeugende Flugmaschine nach Anspruch 1, **dadurch gekennzeichnet, dass** das Steuerungssystem eine graduelle Beschleunigung und eine Kreisgeschwindigkeit von 25 km/h - 550 km/h der auftriebskrafterzeugenden Vehikel (4) und der vorwärtskrafterzeugenden Vehikel (5) entlang der ringförmigen ferromagnetischen Führungsschienen (3) steuert, um so das Gewicht der auftriebskrafterzeugenden Vehikel (4) und der vorwärtskrafterzeugenden Vehikel (5) zu verschieben und zu reduzieren und die Balance der Flugmaschine aufrechtzuerhalten, wobei die an den ringförmigen ferromagnetischen Führungsschienen (3) gebildeten elektromagnetischen Felder zusammengefügt werden, um ein elektromagnetisches Feldsystem zu bilden, welches das Erdmagnetfeld abstößt, und wobei die Abstoßungskraft eine Auftriebskraft für die Flugmaschine bildet.

3. Elektrodynamische schalenförmige stromerzeugende Flugmaschine nach Anspruch 1, **dadurch gekennzeichnet, dass** ein oberer Abschnitt jedes auftriebskrafterzeugenden Vehikels (4) mit einer Windfanghaube (9) versehen ist, welche einen trompetenförmigen Haubenkörper mit einer großen Öffnung (91) und einer kleinen Öffnung (92) umfasst, wobei die große Öffnung (91) in die gleiche Richtung gewandt ist, wie die Vorwärtsrichtung der auftriebskrafterzeugenden Vehikel (4), und wobei innerhalb der Windfanghaube (9) eine Einstellungsvorrichtung (10) zum Öffnen und Schließen der großen Öffnung (91) bereitgestellt ist;
wobei sich zwei Flügel (11) nach außen von jeweiligen zwei lateralen Seiten der vorwärtskrafterzeugenden Vehikel (5) erstrecken und sich radial in Bezug auf die ringförmigen ferromagnetischen Führungsschienen (3) erstrecken, wobei jeder Flügel (11) mit einem Schaftabschnitt (111) und einem windmitreißenden Tragflächenabschnitt (112) versehen ist, wobei die Schaftabschnitte (111) der Flügel (11) an einem Verbindungsbereich mit dem vorwärtskrafterzeugenden Vehikel (5) verbunden sind, und wobei eine Neigungseinstellungsvorrichtung (12) an dem Verbindungsbereich bereitgestellt ist, zum Einstellen eines Neigungswinkels der Tragflächenabschnitte (112) der Flügel (11), wobei Einstellungsenden der Neigungseinstellungsvorrichtung (12) mit den Schaftabschnitten (111) der Flügel (11) gekoppelt sind, wobei die Neigungseinstellungsvorrichtung (12) elektrisch mit einem entsprechenden Steuerungsanschluss des Steuerungssystems verbunden ist;
wobei das Steuerungssystem zuerst die Stromabgabe der elektrischen Batterie steuert, um so die auftriebskrafterzeugenden Vehikel (4) und die vorwärtskrafterzeugenden Vehikel (5) anzutreiben, sich um die ringförmigen ferromagnetischen Führungsschienen (3) zu herum bewegen, und gleichzeitig die Bewegungsrichtungen der auftriebskrafterzeugenden Vehikel (4) und der vorwärtskrafterzeugenden Vehikel (5) so steuert, dass die auftriebskrafterzeugenden Vehikel (4) und die vorwärtskrafterzeugenden Vehikel (5) an benachbarten ringförmigen Führungsschienen (3) in entgegengesetzten Richtungen herum kreisen;
wobei, nachdem die auftriebskrafterzeugenden Vehikel (4) und die vorwärtskrafterzeugenden Vehikel (5) schweben, das Steuerungssystem die Neigungseinstellungsvorrichtung (12) steuert, so dass die Tragflächenabschnitte (112) der Flügel (11) auf einen Winkel von 45° in Bezug auf eine Vorwärtsrichtung der Flügel (11) eingestellt werden, und dass die Auftriebskraft durch Windfangen der vorwärtskrafterzeugenden Vehikel (5) erzeugt wird;
wobei, wenn die Flugmaschine auf eine geeignete Höhe gestiegen ist und Vorwärtsbewegung benötigt wird, das Steuerungssystem die Einstellungsvorrichtungen (10) steuert, um die großen Öffnungen (91) der Windfanghauben (9) zu schließen, und die Neigungseinstellungsvorrichtungen (12) steuert, um die Tragflächenabschnitte (112) der Flügel (11) einzustellen, so dass die Hälfte der ringförmigen ferromagnetischen Führungsschienen (3) als ein Zyklus betrachtet wird, und der Winkel der Tragflächenabschnitte (112) in Bezug auf die Vorwärtsrichtung der Tragflächen zwischen 0° und 90° wechselt, so dass die Neigungswinkel der Tragflächenabschnitte (112) an zwei benachbarten Hälften der ringförmigen ferromagnetischen Führungsschienen (3) einander entgegengesetzt sind, um so Vorwärtsbewegung durch Windmitreißen der Tragflächenabschnitte (112) der vowärtskrafterzeugenden Vehikel (5) zu erreichen.

4. Elektrodynamische schalenförmige stromerzeugende Flugmaschine nach Anspruch 3, **dadurch gekennzeichnet, dass** der Querschnitt jeder der ringförmigen ferromagnetischen Führungsschienen (3) T-förmig ist mit einem an ihrer Oberseite gebildeten rechteckigen Rinne (31); und wobei ein zentraler unterer Abschnitt jedes auftriebskrafterzeugenden Vehikels (4) und jedes vorwärtskrafterzeugenden Vehikels (5) mit einem sich nach unten erstreckenden rechteckigen Vorsprung (8) versehen ist, zum Unterbringen der elektrischen Batterie; und wobei die rechteckigen Vorsprünge (8) angepasst sind, mit den rechteckigen Rinne (31) der ringförmigen ferromagnetischen Führungsschienen (3) ineinander zu greifen.

5. Elektrodynamische schalenförmige stromerzeugende Flugmaschine nach Anspruch 3, **dadurch gekennzeichnet, dass** die auftriebskrafterzeugenden Vehikel (4) an der höchsten ringförmigen ferromagnetischen Führungsschiene (3) des oberen Gehäuses (1) und der niedrigsten ringförmigen ferromagnetischen Führungsschiene (3) des unteren Gehäuses (2) bereitgestellt sind, und wobei die vorwärtskrafterzeugenden Vehikel (5) an den restlichen der ringförmigen ferromagnetischen Führungsschienen (3) bereitgestellt sind; wobei höhere Abschnitte der vorwärtskrafterzeugenden Vehikel (5) ebenfalls mit Windfanghauben versehen sind; und wobei sich der Querschnitt der Tragflächenabschnitte (112) der Flügel (11) von einem hinteren Ende zu einem vorderen Ende, in Vorwärtsrichtung der vorwärtskrafterzeugenden Vehikel (5) hin, verjüngt.

6. Elektrodynamische schalenförmige stromerzeugende Flugmaschine nach irgendeinem der Ansprüche 3-5, **dadurch gekennzeichnet, dass** weiterhin ein Windstromerzeuger (13) hinter der kleinen Öffnung (92) jeder Windfanghaube (9) bereitgestellt ist, zum Rückgewinnen elektrischer Energie, wobei jeder Windstromerzeuger (13) elektrisch mit dem Steuerungssystem verbunden ist.

7. Elektrodynamische schalenförmige stromerzeugende Flugmaschine nach Anspruch 6, **dadurch gekennzeichnet, dass** zwei laterale Seite eines unteren Abschnitts jedes auftriebskrafterzeugenden Vehikels (4) und jedes vorwärtskrafterzeugenden Vehikels (5) mit jeweiligen zwei J-förmig gebogenen Abschnitten (14) gebildet sind, zum Umfassen der ringförmigen ferromagnetischen Führungsschienen (3); wobei jedes Vehikel (4, 5) vier Räder (6) aufweist, die an höheren und niedrigeren Flächen von linken und rechten Seiten der ringförmigen ferromagnetischen Führungsschienen (3) jeweils gestützt werden; und wobei die ersten Magneten (7) an den gebogenen Abschnitten (14) befestigt sind und der rechteckige Vorsprung (8) den Seiten der ringförmigen ferromagnetischen Führungsschienen (3) naheliegt.

8. Elektrodynamische schalenförmige stromerzeugende Flugmaschine nach irgendeinem der Ansprüche 1-5, **dadurch gekennzeichnet, dass** eine hohle Batterieladekugel (15) innerhalb des Maschinenkörpers bereitgestellt ist, wobei die Batterieladekugel (15) umfasst: eine niedrigere Batterieetage (151) zum Speichern von Lithiumionenbatterieflüssigkeit, eine mittlere Batterieladeetage (152), zum Unterbringen einer Batterieladevorrichtung, und eine höhere Warenetage (153), zum Unterbringen von Waren; und wobei das Steuerungssystem zurückgewonnene elektrische Energie zum Batterieladen an die Batterieladevorrichtung in der Batterieladeetage (152) und danach zur Speicherung in die Lithiumionenbatterieflüssigkeit innerhalb der Batterieetage (151) überträgt; und wobei ein äußerer Umfang der Batterieladekugel (15) zur Isolation von Strahlung mit einem versiegelten kugelförmigen Gehäuse (24) versehen ist.

9. Elektrodynamische schalenförmige stromerzeugende Flugmaschine nach Anspruch 8, **dadurch gekennzeichnet, dass** eine Plattform (22) innerhalb des versiegelten kugelförmigen Gehäuses (24) bereitgestellt ist, ringförmige Führungsschienen zum magnetischen Schweben und warentragende Vehikel auf der Plattform (22) bereitgestellt sind, wobei die warentragenden Vehikel auf den ringförmigen Führungsschienen bereitgestellt sind und angepasst sind, bei einer Geschwindigkeit von 100 hm/h - 200 km/h durch magnetisches Schweben herum angetrieben zu werden, um das Gewicht der Waren zu verschieben und zu reduzieren, so dass sich die warentragenden Vehikel in einem Gewichtsreduzierungszustand befinden; und wobei ein niedriger Abschnitt der Batterieladekugel (15) für magnetisches Schweben der Batterieladekugel (15) mit einer Basis (16) versehen ist, wobei die Basis (16) an dem versiegelten kugelförmigen Gehäuse (24) fixiert ist, und wobei ein niedrigeres Ende der Batterieladekugel (15) mit zweiten Magneten (17) und einem Satz Rollen (18) versehen ist, zur anfänglichen Drehung und Stützung der Batterieladekugel (15), die die Batterieladekugel (15) veranlassen, sich über der Basis (16) zu drehen.

10. Elektrodynamische schalenförmige stromerzeugende Flugmaschine nach Anspruch 9, **dadurch gekennzeichnet, dass** ein Wasserreservoir (19) innerhalb des versiegelten kugelförmigen Gehäuses (24) an einem niedrigeren Gehäuse davon bereitgestellt ist, mehrere Wasserpumpen (20) innerhalb des Wasserreservoirs (19) bereitgestellt sind, zum Antreiben von Wasser innerhalb des Wasserreservoirs (19) in einem Kreis, und mehrere dreieckige oder kreuzförmige Wasserbeutel (21) an der Wasseroberfläche des Wasserreservoirs (20) bereitgestellt sind, zum Verhindern von Wasserspritzen.

## Revendications

1. Machine volante électrodynamique de génération de puissance en forme de disque ayant un corps de machine
comprenant des carters supérieur et inférieur en forme de disque (1, 2) pour le transport et le charriage, une centrale électrique pour entraîner le corps de machine à voler, et un système de commande pour la commande du vol ; la centrale électrique comprenant une pluralité de rails de guidage ferromagnétiques annulaires (3) pour la génération d'une lévitation magnétique, une pluralité de véhicules de génération de force de levage (4) pour générer une force de levage pour la machine volante électrodynamique de génération de puissance en forme de disque, et une pluralité de véhicules de génération de force vers l'avant (5) pour générer une force vers l'avant pour la machine volante électrodynamique de génération de puissance en forme de disque ; les rails de guidage ferromagnétiques annulaires (3) étant répartis symétriquement sur des surfaces extérieures opposées des carters supérieur et inférieur (1, 2) et étant disposés de manière étagée ;
les véhicules de génération de force de levage (4) et les véhicules de génération de force vers l'avant (5) étant régulièrement répartis le long des rails de guidage ferromagnétiques annulaires (3) ; des parties inférieures des véhicules de génération de force de levage (4) et des véhicules de génération de force vers l'avant (5) étant dotées de roues (6) et de premiers électroaimants (7) ;
les roues (6) étant en prise roulante avec les rails de guidage ferromagnétiques annulaires (3) ; des lignes magnétiques de force étant générées entre les premiers électroaimants (7) et les rails de guidage ferromagnétiques annulaires (3) pour former des champs électromagnétiques circulaires ;
chaque rail de guidage ferromagnétique annulaire (3) étant formé avec deux parties d'aile annulaires ;
le système de commande assurant la commande du mouvement circulaire des véhicules (4, 5) le long des rails de guidage ferromagnétiques annulaires (3) pour générer une force de levage et une force vers l'avant pour le vol de la machine volante et simultanément, lorsqu'ils se déplacent en un cercle, les véhicules (4, 5) modifiant les lignes magnétiques de force des bobines d'induction (23) de manière à faire en sorte que les bobines d'induction (23) génèrent une force électrodynamique pour la génération de puissance ; les véhicules (4, 5), les bobines d'induction (23) et l'ensemble de génération de puissance formant ensemble un générateur de puissance, les générateurs de puissance sur les rails de guidage ferromagnétiques annulaires (3) formant ensemble un groupe de générateurs de puissance qui génère de l'énergie électrique sous la forme d'une force électrodynamique pour la génération d'une force de lévitation magnétique et d'une force d'entraînement entre les rails de guidage ferromagnétiques annulaires (3) et les véhicules (4, 5) ;
**caractérisée en ce que** les véhicules de génération de force de levage (4) et les véhicules de génération de force vers l'avant (5) sont en outre dotés de batteries électriques pour fournir une puissance d'entraînement initiale pour les véhicules (4, 5) ;
les deux parties d'aile annulaires de chaque rail de guidage ferromagnétique annulaire (3) étant dotées de bobines d'induction (23) et d'un ensemble de génération de puissance pour la génération de puissance, chaque partie d'aile annulaire des rails de guidage ferromagnétiques annulaires (3) devenant un corps de génération de puissance qui est doté d'une batterie d'accumulation pour accumuler de l'énergie électrique, des extrémités de sortie des bobines d'induction étant raccordées à des bornes d'entrée d'alimentation électrique des rails de guidage ferromagnétiques annulaires (3) et de la batterie d'accumulation ;
et **en ce que** l'énergie convient pour être récupérée et accumulée dans la batterie d'accumulation pour une utilisation de réserve.

2. Machine volante électrodynamique de génération de puissance en forme de disque telle que revendiquée par la revendication 1, **caractérisée en ce que** le système de commande assure la commande de l'accélération progressive et de la vitesse de circulation de 25 km/h - 550 km/h des véhicules de génération de force de levage (4) et des véhicules de génération de force vers l'avant (5) le long des rails de guidage ferromagnétiques annulaires (3) de manière à changer et réduire le poids des véhicules de génération de force de levage (4) et des véhicules de génération de force vers l'avant (5) et maintenir l'équilibre de la machine volante, les champs électromagnétiques circulaires formés sur les rails de guidage ferromagnétiques annulaires (3) étant réunis ensemble pour former un système de champ électromagnétique qui repousse le champ magnétique terrestre, et la force de répulsion formant la force de levage pour la machine volante.

3. Machine volante électrodynamique de génération de puissance en forme de disque telle que revendiquée par la revendication 1, **caractérisée en ce qu'**une partie supérieure de chacun des véhicules de génération de force de levage (4) est dotée d'une calotte de prise au vent (9) comprenant un corps de calotte en forme de trompète ayant une grande ouverture (91) et une petite ouverture (92), la grande ouverture (91) étant orientée dans la même direction que la direction vers l'avant des véhicules de génération de force de levage (4), et un dispositif de réglage (10) étant fourni à l'intérieur de la calotte de prise au vent (9) pour ouvrir et fermer la grande ouverture (91) ;
deux pales (11) s'étendant vers l'extérieur respectivement à partir de deux côtés latéraux des véhicules de génération de force vers l'avant (5) et radialement par rapport aux rails de guidage ferromagnétiques annulaires (3), chaque pale (11) étant dotée d'une partie de pied (111) et d'une partie d'aile de balayage de vent (112), les parties de pied (111) des pales (11) étant raccordées au véhicule de génération de force vers l'avant (5) au niveau d'une zone de raccordement, et un dispositif de réglage d'inclinaison (12) étant fourni au niveau de la zone de raccordement pour régler l'angle d'inclinaison des parties d'aile (112) des pales (11), des extrémités de réglage du dispositif de réglage d'inclinaison (12) étant couplées avec les parties de pied (111) des pales (11), le dispositif de réglage d'inclinaison (12) étant raccordé électriquement à un terminal de commande correspondant du système de commande ;
le système de commande assurant tout d'abord la commande de la puissance de sortie de la batterie électrique de manière à entraîner les véhicules de génération de force de levage (4) et les véhicules de génération de force vers l'avant (5) pour qu'ils se déplacent autour des rails de guidage ferromagnétiques annulaires (3), et commandant simultanément les directions de déplacement des véhicules de génération de force de levage (4) et des véhicules de génération de force vers l'avant (5) de manière à ce que les véhicules de génération de force de levage (4) et les véhicules de génération de force vers l'avant (5) sur des rails de guidage ferromagnétiques annulaires (3) adjacents circulent autour dans des directions opposées ; une fois que les véhicules de génération de force de levage (4) et les véhicules de génération de force vers l'avant (5) sont en lévitation, le système de commande assurant la commande du dispositif de réglage d'inclinaison (12) de manière à ce que les parties d'aile (112) des pales (11) soient réglées selon un angle de 45° par rapport à une direction vers l'avant des pales (11), et cette force de levage étant générée par prise au vent des véhicules de génération de force vers l'avant (5) ; lorsque la machine volante est montée à une hauteur adéquate et qu'un mouvement vers l'avant est requis, le système de commande assurant la commande des dispositifs de réglage (10) afin de fermer les grandes ouvertures (91) des calottes de prise au vent (9) et assurant la commande des dispositifs de réglage d'inclinaison (12) afin de régler les parties d'aile (112) des pales (11) de manière à ce que la moitié des rails de guidage ferromagnétiques annulaires (3) soient considérés en tant qu'un cycle, et l'angle des parties d'aile (112) par rapport à la direction vers l'avant des pales variant entre 0° et 90° de manière à ce que les angles d'inclinaison des parties d'aile (112) au niveau de deux moitiés adjacentes des rails de guidage ferromagnétiques annulaires (3) soient opposés l'un par rapport à l'autre de manière à obtenir un mouvement vers l'avant par balayage de vent des parties d'aile (112) des véhicules de génération de force vers l'avant (5).

4. Machine volante électrodynamique de génération de puissance en forme de disque telle que revendiquée par la revendication 3, **caractérisée en ce que** la section transversale de chacun des rails de guidage ferromagnétiques annulaires (3) est en forme de T avec une dépression (31) rectangulaire formée sur son haut ; et une partie inférieure centrale de chaque véhicule de génération de force de levage (4) et de chaque véhicule de génération de force vers l'avant (5) étant dotée d'une projection rectangulaire s'étendant vers le bas (8) pour loger la batterie électrique ; et les projections rectangulaires (8) étant adaptées pour s'accoupler avec les dépressions rectangulaires (31) des rails de guidage ferromagnétiques annulaires (3).

5. Machine volante électrodynamique de génération de puissance en forme de disque telle que revendiquée par la revendication 3, **caractérisée en ce que** les véhicules de génération de force de levage (4) sont fournis sur le rail de guidage ferromagnétique annulaire (3) le plus élevé du carter supérieur (1) et le rail de guidage ferromagnétique annulaire (3) le plus bas du carter inférieur (2), et les véhicules de génération de force vers l'avant (5) étant fournis sur le reste des rails de guidage ferromagnétiques annulaires (3) ; des parties supérieures des véhicules de génération de force vers l'avant (5) étant également dotées de calottes de prise au vent ; et la section transversale des parties d'aile (112) des pales (11) s'effilant d'une extrémité arrière vers une extrémité avant vers la direction en avant des véhicules de génération de force vers l'avant (5).

6. Machine volante électrodynamique de génération de puissance en forme de disque telle que revendiquée par l'une quelconque des revendications 3-5, **caractérisée en ce qu'**un générateur d'énergie éolienne (13) est en outre fourni derrière la petite ouverture (92) de chaque calotte de prise au vent (9) pour récupérer de l'énergie électrique, chaque générateur d'énergie éolienne (13) étant raccordé électriquement au système de commande.

7. Machine volante électrodynamique de génération de puissance en forme de disque telle que revendiquée par la revendication 6, **caractérisée en ce que** deux côtés latéraux d'une partie inférieure de chaque véhicule de génération de force de levage (4) et de chaque véhicule de génération de force vers l'avant (5) sont formés respectivement avec des parties courbées en forme de J (14) pour entourer les rails de guidage ferromagnétiques annulaires (3) ; chaque véhicule (4, 5) ayant quatre roues (6) supportées sur des surfaces supérieure et inférieure de côtés de droite et de gauche respectivement des rails de guidage ferromagnétiques annulaires (3) ; et les premiers aimants (7) étant montés sur les parties courbées (14) et la projection rectangulaire (8) à proximité des côtés des rails de guidage ferromagnétiques annulaires (3).

8. Machine volante électrodynamique de génération de puissance en forme de disque telle que revendiquée par l'une quelconque des revendications 1-5, **caractérisée en ce qu'**une boule creuse de charge de batterie (15) est fournie à l'intérieur du corps de machine, la boule de charge de batterie (15) comprenant un étage de batterie inférieur (151) pour stocker du liquide de batterie à ions de lithium, un étage de charge de batterie du milieu (152) pour loger un dispositif de charge de batterie, et un étage à produits supérieur (153) pour loger des produits ; et le système de commande transférant l'énergie électrique récupérée au dispositif de charge de batterie à l'étage de charge de batterie (152) pour la charge de la batterie, et ensuite dans le liquide de batterie à ions de lithium à l'étage de batterie (151) pour le stockage ; et une périphérie extérieure de la boule de charge de batterie (15) étant dotée d'un boîtier sphérique hermétique (24) pour l'isolation par rapport aux radiations.

9. Machine volante électrodynamique de génération de puissance en forme de disque telle que revendiquée par la revendication 8, **caractérisée en ce qu'**une plateforme (22) est fournie dans le boîtier sphérique hermétique (24), des rails de guidage annulaires pour la lévitation magnétique et des véhicules de transport de produits étant fournis sur la plateforme (22), les véhicules de transport de produits étant fournis sur les rails de guidage annulaires et adaptés pour être entraînés autour par lévitation magnétique à une vitesse de 100 km/h - 200 km/h afin de changer et réduire le poids des produits de manière à ce que les véhicules de transport de produits soient dans un état de réduction de poids ; et une partie inférieure de la boule de charge de batterie (15) étant dotée d'une base (16) pour la lévitation magnétique de la boule de charge de batterie (15), la base (16) étant fixée sur le boîtier sphérique hermétique (24), et une extrémité inférieure de la boule de charge de batterie (15) étant dotée de deuxièmes aimants (17) et d'un jeu de rouleaux (18) pour la rotation initiale et le support de la boule de charge de batterie (15), en faisant tourner la boule de charge de batterie (15) au-dessus de la base (16).

10. Machine volante électrodynamique de génération de puissance en forme de disque telle que revendiquée par la revendication 9, **caractérisée en ce qu'**un réservoir d'eau (19) est fourni à l'intérieur du boîtier sphérique hermétique (24) sur un boîtier inférieur de celui-ci, une pluralité de pompes à eau (20) étant fournies dans le réservoir d'eau (19) pour entraîner de l'eau en un cercle dans le réservoir d'eau (19), et une pluralité de sachets d'eau triangulaires ou en forme de croix (21) étant fournis à la surface de l'eau du réservoir d'eau (20) pour empêcher l'eau d'éclabousser.
